# EUROPÄISCHE PATENTSCHRIFT

(11) **EP 1 279 300 B1**
(45) Veröffentlichungstag und Bekanntmachung des Hinweises auf die Patenterteilung: **14.07.2010**
(21) Anmeldenummer: 01936024.7
(22) Anmeldetag: 02.05.2001
(51) Int. Cl.: H04Q 3/00, H04Q 3/545, H04L 12/24

(54) **KOORDINIERTE NETZWERKWEITE ADMINISTRATION VON VERMITTLUNGSSTELLEN**
CO-ORDINATED NETWORK-WIDE ADMINISTRATION OF EXCHANGES
GESTION COORDONNEE DE CENTRAUX TELEPHONIQUES AU NIVEAU D'UN RESEAU

(30) Priorität: 04.05.2000 DE 10021738
(43) Veröffentlichungstag der Anmeldung: 29.01.2003
(73) Patentinhaber: Nokia Siemens Networks GmbH & Co. KG, 81541 München (DE)
(72) Erfinder: BOCK, Christoph, 81379 München (DE); HUTTEL, Joachim, 81241 München (DE); MÖLLER, Michael, 82194 Gröbenzell (DE); ROMANSKI, Irena, 82544 Egling (DE); WALZ, Jochen, 82152 Planegg-Martinsried (DE)
(86) Internationale Anmeldenummer: PCT/DE2001/001656
(87) Internationale Veröffentlichungsnummer: WO 2001/084854

(56) Entgegenhaltungen:
- EP-A- 0 854 607
- US-A- 5 533 116
- PETERMUELLER W J: "Q3 OBJECT MODELS FOR THE MANAGEMENT OF EXCHANGES" IEEE COMMUNICATIONS MAGAZINE, Bd. 34, Nr. 3, März 1996 (1996-03), Seiten 48-60, XP000557377 ISSN: 0163-6804

## Beschreibung

Die vorliegende Erfindung betrifft eine Verwaltungsvorrichtung zum Verwalten und Verändern von Betriebsfunktionen von Vermittlungsstellen in einem Fernsprechnetz, wie es im Oberbegriff des beigefügten Anspruches 1 beschrieben ist, und ein in dieser Verwaltungsvorrichtung angewendetes Verfahren, wie es im Oberbegriff des beigefügten Anspruches 7 beschrieben ist.

Vermittlungsstellen dienen zur Verbindung von Teilnehmern bzw. deren Endgeräten mit dem Fernsprechnetz. In einem Fernsprechnetz sind eine Vielzahl von Vermittlungsstellen vorhanden; die Vermittlungsstellen sind untereinander vernetzt.

Die Verwaltung von Betriebsfunktionen in der Steuerungssoftware der Vermittlungsstellen erfolgt durch Verwaltungskommandos (z. B. über proprietäre Man-Machine Language Kommandos, MML, oder standardisierte Q3-Kommandos), die in eine Konsole eingegeben und von dort aus an die Vermittlungsstelle gesendet werden. Solche Verwaltungsaufgaben können z. B. das logische Einrichten, Ändern oder Löschen eines Endgerätes eines Teilnehmers sein.

Bei einigen Betriebsfunktionen müssen bei einer Änderung in einer Vermittlungsstelle andere Vermittlungsstellen mit koordiniert werden, d. h. die verschiedenen Verwaltungskommandos an die betroffenen Vermittlungsstellen müssen genau aufeinander abgestimmt sein. Ein Beispiel hierfür ist das Anpassen von Routing-Tabellen in mehreren Vermittlungsstellen an eine Änderung in einer Vermittlungsstelle. Weichen dabei die Verwaltungskommandos oder ihre Parameter von dieser logischen Abstimmung ab, z. B. durch eine Falscheingabe, so ist die netzwerkweite Funktionalität der entsprechenden Betriebsfunktionen im Fernsprechnetz nicht möglich.

Beim Stand der Technik wird die Koordination von netzwerkweiter Verwaltung manuell durchgeführt. Dabei werden bei der Änderung einer Betriebsfunktion alle notwendigen Verwaltungskommandos von einem Operator (d.h. von einer berechtigten Person) manuell zusammengestellt. Lokale Operatoren senden dann die unterschiedlichen, aufeinander abgestimmten Vewaltungskommandos über eine Konsole (im weiteren Verwaltungsvorrichtung genannt) an die entsprechende Vermittlungsstelle.

Der Nachteil dieser Lösung besteht darin, daß sie einen erheblichen Verwaltungsaufwand durch das manuelle Zusammenstellen von vielen Verwaltungskommandos für eine Vewaltungsaufgabe bzw. Betriebsfunktion nach sich zieht.

Außerdem können bei einer Vielzahl von Verwaltungskommandos sehr leicht Fehler bei der Zusammenstellung oder der Eingabe der Kommandos entstehen. Dann müssen für die Analyse der Fehler und eventueller Auswirkungen auf die koordinierte Verwaltung die Rückmeldungen aller Verwaltungskommandos einer Verwaltungsaufgabe gesammelt und manuell ausgewertet werden.

Im Europäischen Patent EP 0 854 607 A1 "Verfahren zum Planen und Konfigurieren eines Kommunikationsnetzwerkes" ist eine Lösung angegeben, in der mehrere Plan-Konfigurationen überlagert werden. Die Planung erfolgt dabei blockweise, es werden Soll-Konfigurationen definiert, denen das Netz zu einem bestimmten Betriebszeitpunkt entsprechen muß. Individuelle Einzelschritte zwischen diesen Konfigurationssprüngen sind nicht vorgesehen.

Die Aufgabe der vorliegenden Erfindung ist somit, eine Verwaltungsvorrichtung zum Verwalten und Verändern von Betriebsfunktionen von Vermittlungsstellen gemäß dem Oberbegriff des beigefügten Anspruches 1 und ein in dieser Verwaltungsvorrichtung angewendetes Verfahren zum Verwalten und Verändern von Betriebsfunktionen von Vermittlungsstellen gemäß dem Oberbegriff des beigefügten Anspruches 7 bereitzustellen, bei denen eine Verringerung des Verwaltungsaufwandes und eine Verringerung der Fehlerrate bei der Verwaltung und Veränderung von Betriebsfunktionen in Vermittlungsstellen ermöglicht wird.

Diese Aufgabe wird durch eine Verwaltungsvorrichtung gemäß dem beigefügten Anspruch 1 und ein in dieser Verwaltungsvorrichtung angewendetes Verfahren gemäß dem beigefügten Anspruch 7 ermöglicht.

Gemäß der vorliegenden Erfindung werden die für eine Verwaltungsaufgabe bzw. Betriebsfunktion benötigten Verwaltungskommandos zentral von der erfindungsgemäßen Verwaltungsvorrichtung automatisch berechnet bzw. erzeugt und an alle betroffenen Vermittlungsstellen versendet.

Diese automatische Koordinierung und direkte Anbindung an die Vermittlungsstellen bringt eine enorme Zeitersparnis mit sich. Dadurch läßt sich die Produktivität bei der Durchführung von Verwaltungsaufgaben wesentlich steigern (um einen Faktor > 100), was dem Betreiber des Fernsprechnetzes bzw. der Vermittlungsstellen eine breite Vermarktung von Diensten bzw. Features ermöglicht, die eine komplexe Verwaltung erfordern.

Weiterhin werden durch die automatische Generierung der Verwaltungskommandos Fehler bei der manuellen Koordinierung bzw. Verwaltung reduziert oder sogar ausgeschlossen. Die Verwaltung kann somit in einer zentralisierten Einrichtung durch wenige speziell geschulte Fachkräfte erfolgen, wodurch eine teuere Schulung einer Vielzahl lokaler Operatoren entfällt.

Vorteilhafte Ausgestaltungen der vorliegenden Erfindung sind in den Unteransprüchen 2 bis 6 bzw. 8 bis 12 wiedergegeben.

Um die Betriebsfunktionen und die daraus resultierenden Verwaltungskommandos korrekt berechnen und erzeugen zu können, ist es erforderlich, daß die hierzu relevanten Informationen (Daten) zentral in einer Speichervorrichtung abgespeichert werden. Die Verwaltungsvorrichtung wertet zur Durchführung der entsprechenden Betriebsfunktion die jeweiligen Daten aus der Speichervorrichtung aus.

Die vorliegende Erfindung kann in besonders vorteilhafter Weise im sogenannten CENTREX-Dienst (Centralised Office Exchange Service) eingesetzt werden, um Gruppen und in diesen Gruppen enthaltene Objekte zu verwalten (administrieren). Diese Anwendung wird noch anhand eines bevorzugten Ausführungsbeispiels näher erläutert.

Insbesondere das Verändern von Betriebsfunktionen, die das Routing (Wegelenkung) von Verbindungen betreffen, hat Auswirkungen auf mehrere Vermittlungsstellen. Deshalb wird die vorliegende Erfindung vorteilhafterweise zum Verwalten und Verändern von Routing-Tabellen in Vermittlungsstellen eingesetzt.

Zur Eingabe der zu administrierenden Betriebsfunktionen steht dem Benutzer bzw. Operator dabei eine standardisierte graphische Benutzeroberfläche zur Verfügung, wodurch eine Erleichterung in die Einarbeitung von Anwendungen, die für die netzwerkweite Verwaltung verwendet werden, ermöglicht wird.

Durch die Zentralisierung der Verwaltungsaufgabe wird ebenfalls eine zentralisierte Verarbeitung von Rückmeldungen der von einer Verwaltungsaufgabe betroffenen Vermittlungsstellen ermöglicht. Die Protokollierung und Fehleranalyse wird dadurch wesentlich erleichtert.

Die vorliegende Erfindung wird nachfolgend anhand von bevorzugten Ausführungsbeispielen unter Bezug auf die beigefügten Zeichnungen näher erläutert, in denen zeigen:
- Fig. 1: die schematische Darstellung der erfindungsgemäßen Verwaltungsvorrichtung in einem Fernsprechnetz, und
- Fig. 2 und 3: Beispiele für die erfindungsgemäße Koordination von Verwaltungsaufgaben.

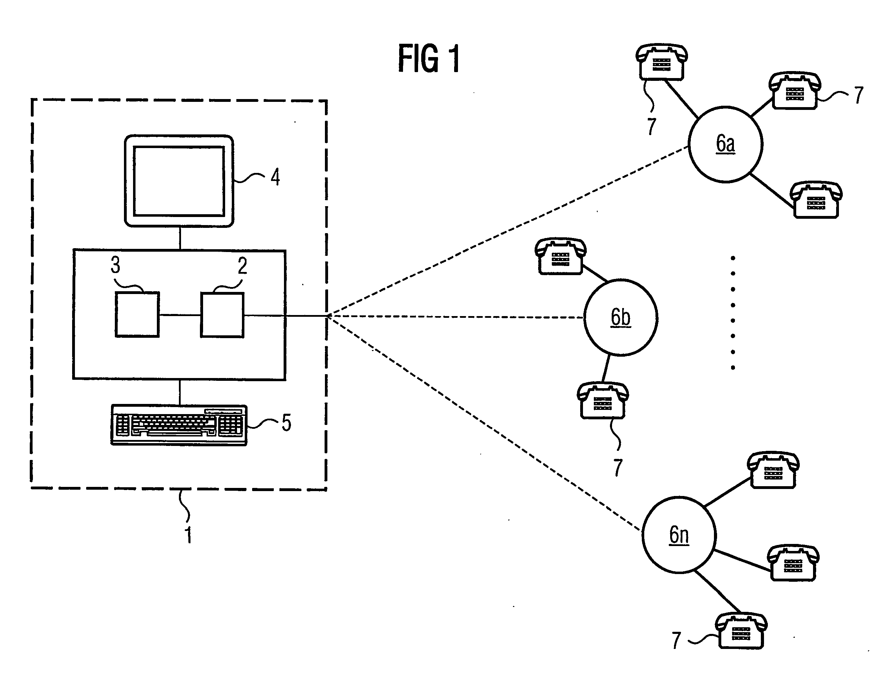

Wie aus Fig. 1 zu sehen ist, besteht die erfindungsgemäße Verwaltungsvorrichtung 1 aus einem Terminal bzw. einer Konsole mit einer Eingabevorrichtung 5 (Tastatur, Maus etc.), einem Bildschirm 4, Koordinierungsmitteln 2 zum Koordinieren von Betriebsfunktionen und einer Speichereinrichtung 3 zum Speichern der Informationen, die zur Verwaltung und Berechnung der Verwaltungskommandos benötigt werden. Denkbar wäre auch eine räumliche Trennung von Verwaltungsvorrichtung 1 und Verwaltung der Informationen in der Speichervorrichtung 3.

Die Koordinierung der Verwaltung und Veränderung (Administration) von Betriebsfunktionen, die Auswirkungen auf mehrere Vermittlungsstellen haben, erfolgt somit zentralisiert. In der Verwaltungsvorrichtung 1 sind die Koordinierungsmittel 2 zum Koordinieren von Betriebsfunktionen als Software in der Verwaltungsvorrichtung 1 implementiert; die Verwaltungsvorrichtung könnte z.B. ein oder mehrere Computer (PC) sein, in dem ein Programm abläuft, das die Aufgaben der Koordinierungsmittel 2 ausführt. Eine graphische Benutzeroberfläche dient zur Eingabe der Information, d. h. der zu ändernden Betriebsfunktion, die erforderlich ist, um eine bestimmte Verwaltungsaufgabe durchführen zu können. Aus einem minimalen Satz von Benutzereingaben werden die Verwaltungskommandos automatisiert erzeugt, und automatisch an die betroffenen Vermittlungsstellen versendet. Dabei können durch eine Bildschirmeingabe einige tausend Verwaltungskommandos (z. B. MML-Kommandos) im Hintergrund berechnet und erzeugt werden.

Die Logik für die jeweilige Aufgabe zur netzwerkweiten Verwaltung ist in der Applikations-Software verankert. Der Operator wird somit von der manuellen Koordinierung befreit.

Durch die enorme Vereinfachung der Bedienoberfläche zur Administration wird eine übersichtliche Protokollierung der durchgeführten Betriebsfunktionen von abgesendeten Verwaltungskommandos notwendig. Deshalb werden die Quittungen (Rückmeldungen) der Vermittlungsstellen auf die Verwaltungskommandos zentral gesammelt und in einer Datenbank abgelegt.

Die Quittungen können dabei z. B. in 3 unterschiedlichen Granularitätsstufen dargestellt werden. In einer Stufe erhält man zunächst einen Überblick über verschiedene ausgeführte Verwaltungsaufgaben. In einer weiteren Detailstufe werden die Vermittlungsstellen angezeigt, die für eine bestimmte Verwaltungsaufgabe angesprochen wurden. In der höchsten Detailstufe werden die einzelnen Kommandos an eine Vermittlungsstelle und die jeweilige Rückmeldung angezeigt. Auf jeder Stufe wird dabei angezeigt, ob die Aufgabe erfolgreich oder fehlerhaft ausgeführt wurde (z. B. gesamt, an eine Vermittlungsstelle, oder einzelne Kommandos).

Die vorliegende Erfindung wird nachfolgend der Verwaltung von Gruppen im CENTREX-Dienst beschrieben.

CENTREX ist ein spezieller Dienst in einem Netzknoten, d. h. in einer Vermittlungsstelle, der einem Teil der angeschlossenen Objekte (z. B. Endgeräte, Nebenstellenanlagen) die Funktionalität ähnlich einer Nebenstellenanlage zur Verfügung stellt. Diese Objekte sind dabei in Gruppen organisiert, wobei eine Gruppe in ihrer Funktionalität ähnlich einer Nebenstellenanlage entspricht. Dieser Dienst ist z. B. für Firmen sinnvoll, da bei der Nutzung dieses Dienstes keine eigene Nebenstellenanlage angeschafft werden muß. Weiterhin ist es bei diesem Dienst möglich, über das Fernsprechnetz in mehreren Vermittlungsstellen verteilte Gruppen einzurichten, deren Objekte untereinander über einen privaten Rufnummernplan erreichbar sind. Dabei haben die einzelnen Gruppen bzw. deren Objekte ebenfalls die Funktion einer Nebenstellenanlage; die Objekte können untereinander über einen privaten Rufnummernplan erreicht werden. Je nach Netzgröße sind CENTREX-Gruppen möglich, die auf über tausend Vermittlungsstellen verteilt sind.

Zur Erstellung eines Rufnummernplanes müssen die Verwaltungskommandos an die betroffenen Vermittlungsstellen koordiniert werden, da eine Änderung in einer Vermittlungsstelle (z. B. das Einrichten einer neuen Gruppe) Auswirkungen auf andere Vermittlungsstellen haben kann. In diesem Fall kann eine Verwaltungsaufgabe je einige hundert bis tausend Verwaltungskommandos an über eintausend Vermittlungsstellen umfassen.

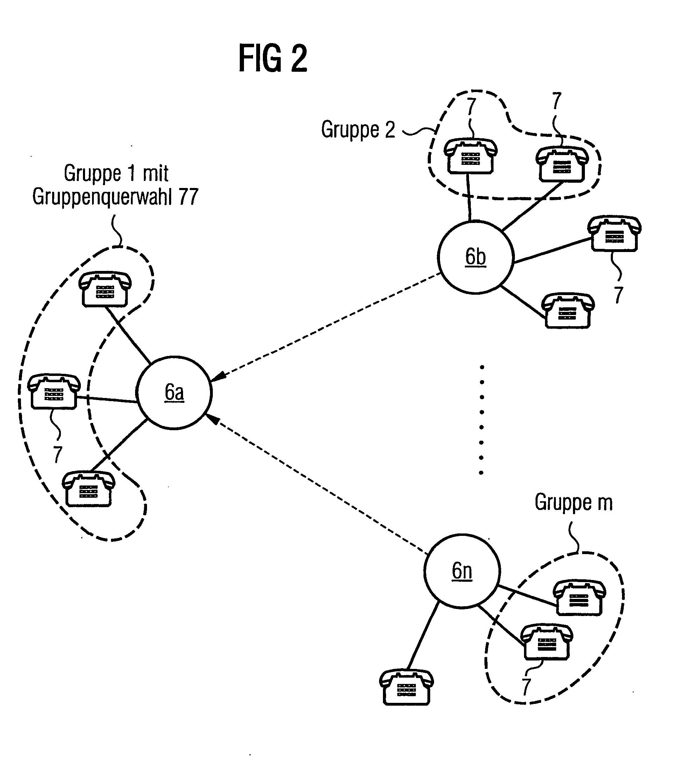

In Fig. 2 wird die Möglichkeit der Gruppenquerwahl (Group Dialing) dargestellt. Dabei werden z. B. Objekte (z. B. Endgeräte 7) der Gruppe 1 von allen anderen Gruppen über die Gruppenquerwahl (z. B. 77) plus interner Rufnummer (z. B. 888) erreicht. Diese Gruppenquerwahl muß dazu in jeder Vermittlungsstelle eingerichtet werden, wo eine zusammenhängende Gruppe eingerichtet ist, um die Gruppe 1 bzw. einen daran angeschlossenen Teilnehmer von jeder zugehörigen CENTREX-Gruppe (z. B. Filialen einer Firma) aus erreichen zu können. Jede Gruppe hat dabei ihren spezifischen Code (entsprechend der Gruppenquerwahl), der in allen anderen Gruppen bzw. Vermittlungsstellen eingerichtet werden muß. Bei 1000 Gruppen bedeutet das insgesamt 1 Millionen MML-Kommandos; in einer Vermittlungsstelle einer Pro-CENTREX-Gruppe zur Festlegung der Querwahl, unter der die Gruppe erreicht werden soll und jeweils ein Kommando für die 999 anderen CENTREX-Gruppen, um die Querwahl dort einzutragen.

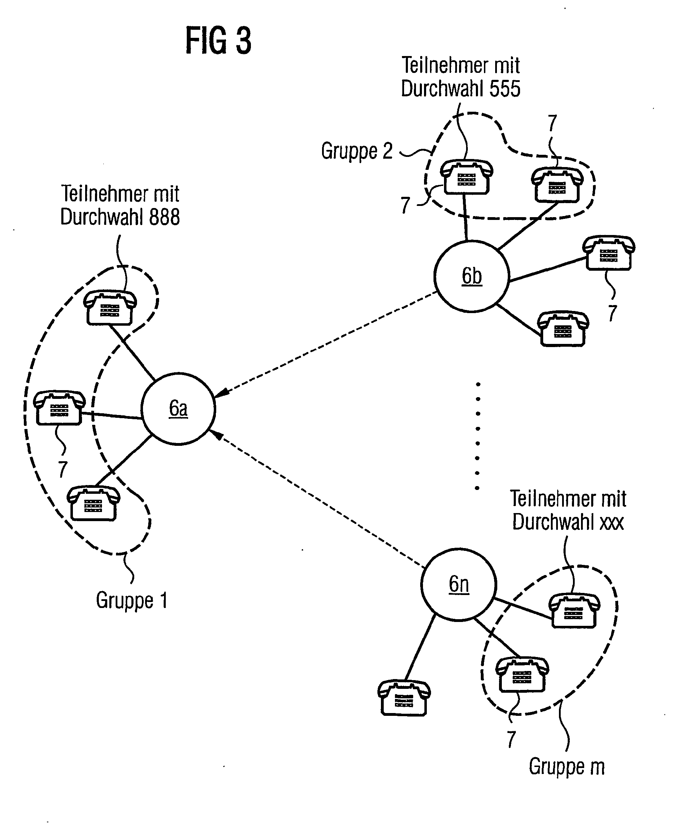

Eine weitere Möglichkeit, in der ein CENTREX-Teilnehmer (z. B. an Vermittlungsstelle 6a) einen weiteren CENTREX-Teilnehmer an einer anderen Vermittlungsstelle (z. B. 6b) erreicht, besteht in der Einrichtung eines einheitlichen, netzwerkweiten Rufnummernplanes, wie in Fig. 3 gezeigt wird.

Dabei ist jeder Teilnehmer über sein Endgerät 7 über eine Rufnummer und Gruppenquerwahl zu erreichen. Dazu muß die interne Rufnummer des Teilnehmers (z. B. 888) innerhalb aller zusammenhängenden Gruppen netzwerkweit eindeutig sein. Die Rufnummer wird dabei an allen Vermittlungsstellen eingerichtet, über welche die zusammenhängenden CENTREX-Gruppen verteilt sind; erst dadurch wird die Erreichbarkeit des Teilnehmers über das Fernsprechnetz gewährleistet. Bei 1000 Gruppen mit jeweils 10 Teilnehmern bedeutet das ein Volumen von 10 Millionen MML-Kommandos.

Gemäß der vorliegenden Erfindung werden durch die Koordinierungsmittel 2 zum Koordinieren von Betriebsfunktionen zur Einrichtung der beschriebenen Rufnummernpläne sowie für andere Bereiche der Verwaltung von CENTREX-Gruppen Koordinierungsfunktionen zur Bewältigung der beschriebenen Aufgaben bereitgestellt.

So muß z. B. für die Einrichtung eines netzwerkweiten internen Rufnummernplanes nach Fig. 1 die Querwahl, unter der die einzelnen Gruppen erreichbar sein sollen und nach Fig. 2 die interne Rufnummer des Teilnehmers in allen betroffenen Vermittlungsstellen eingerichtet werden. Die Berechnung, Erzeugung und Versendung der hierzu notwendigen Verwaltungskommandos an die jeweiligen Gruppen in den betroffenen Vermittlungsstellen, um die Erreichbarkeit der jeweiligen Gruppe bzw. eines Teilnehmers zu gewährleisten, geschieht dabei erfindungsgemäß automatisch.

Weiterhin ist die Möglichkeit gegeben, aufwendige Verwaltungsaufgaben in eine Warteschlange zu legen und einen Zeitpunkt zu bestimmen, an dem die Kommandos automatisch gestartet werden, z. B. zu einer Zeit mit geringer Last in den Vermittlungsstellen.

## Patentansprüche

1. Verwaltungvorrichtung (1) zum Verwalten und Verändern von Betriebsfunktionen mehrerer in einem Fernsprechnetz angeordneter Vermittlungsstellen, wobei die Betriebsfunktionen der Vermittlungsstellen (6a...6n) durch Verwaltungskommandos, die sie von der Verwaltungsvorrichtung (1) empfangen, verwaltet und verändert werden, mit einer Eingabevorrichtung (5) zur Eingabe von Informationen bezüglich zumindest einer zu ändernden Betriebsfunktion,
**dadurch gekennzeichnet,**
**daß** der Verwaltungsvorrichtung (1) Koordinierungsmittel zugeordnet sind, welche derart ausgestaltet sind,
**daß** nach Eingabe von Informationen bezüglich der zumindest einen zu ändernden Betriebsfunktion
- die Veränderung der Betriebsfunktionen aller betroffenen Vermittlungsstellen automatisch koordiniert, und
- im Rahmen der automatischen Koordinierung die Verwaltungskommandos für alle betroffenen Vermittlungsstellen automatisch berechnet und an die betroffenen Vermittlungsstellen versendet werden.

2. Verwaltungsvorrichtung (1) gemäß Anspruch 1,
**dadurch gekennzeichnet,**
**daß** eine Speichervorrichtung (3) vorgesehen ist, in der zentral die Informationen, die zur Verwaltung und Berechnung der Verwaltungskommandos benötigt werden, gespeichert werden.

3. Verwaltungsvorrichtung (1) gemäß Anspruch 1 oder 2,
**dadurch gekennzeichnet,**
**daß** Koordinierungsmittel (2) vorgesehen sind, die zum Verwalten und Verändern der Betriebsfunktionen von Gruppen und in diesen Gruppen enthaltenen Objekten im CENTREX-Dienst dienen.

4. Verwaltungsvorrichtung (1) gemäß Anspruch 1, 2 oder 3,
**dadurch gekennzeichnet,**
**daß** Koordinierungsmittel (2) vorgesehen sind, die zum Verwalten und Verändern von Routing-Tabellen verwendet werden.

5. Verwaltungsvorrichtung (1) gemäß einem der Ansprüche 1 bis 4,
**dadurch gekennzeichnet,**
**daß** eine Eingabevorrichtung (5) und ein Bildschirm (4) vorgesehen sind, die zur Eingabe der zu ändernden Betriebsfunktionen eine grafische Benutzeroberfläche zur Verfügung stellen.

6. Verwaltungsvorrichtung (1) gemäß einem der Ansprüche 1 bis 5,
**dadurch gekennzeichnet,**
**daß** Koordinierungsmittel (2) vorgesehen sind, die Rückmeldungen der entsprechenden Vermittlungsstellen (6a...6n) über das Ausführen der versendeten Verwaltungskommandos empfangen und verarbeiten.

7. Verfahren zum Verwalten und Verändern von Betriebsfunktionen mehrerer in einem Fernsprechnetz angeordneter Vermittlungsstellen,
bei dem die Betriebsfunktionen der jeweiligen Vermittlungsstellen durch Verwaltungskommandos verwaltet und verändert werden,
**dadurch gekennzeichnet,**
**daß** nach Eingabe von Informationen bezüglich zumindest einer zu ändernden Betriebsfunktion
- die Veränderung der Betriebsfunktionen aller betroffenen Vermittlungsstellen automatisch koordiniert, und
- im Rahmen der automatischen Koordinierung die Verwaltungskommandos für alle betroffenen Vermittlungsstellen automatisch berechnet und an die betroffenen Vermittlungsstellen versendet werden.

8. Verfahren gemäß Anspruch 7,
**dadurch gekennzeichnet,**
**daß** Informationen, die zur Verwaltung und Berechnung der Verwaltungskommandos benötigt werden, zentral abgespeichert werden.

9. Verfahren gemäß Anspruch 7 oder 8,
**dadurch gekennzeichnet,**
**daß** es zum Verwalten und Verändern der Betriebsfunktionen von Gruppen und in diesen Gruppen enthaltenen Objekten im CENTREX-Dienst verwendet wird.

10. Verfahren gemäß Anspruch 7, 8 oder 9,
**dadurch gekennzeichnet,**
**daß** es zum Verwalten und Verändern von Routing-Tabellen verwendet wird.

11. Verfahren gemäß einem der Ansprüche 7 bis 10,
**dadurch gekennzeichnet,**
**daß** zur Eingabe der zu ändernden Betriebsfunktionen eine grafische Benutzeroberfläche zur Verfügung steht.

12. Verfahren gemäß einem der Ansprüche 7 bis 11,
**dadurch gekennzeichnet,**
**daß** Rückmeldungen der entsprechenden Vermittlungsstellen (6a...6n) über das Ausführen der versendeten Verwaltungskommandos zentral empfangen und verarbeitet werden.

## Claims

1. Administration apparatus (1) for administration and changing of operating functions of a plurality of switching centres which are arranged in a telephone network, wherein the operating functions of the switching centres (6a...6n) are administered and changed by administration commands which they receive from the administration apparatus (1), having an input apparatus (5) for inputting information relating to at least one operating function to be changed,
**characterized**
**in that** the administration apparatus (1) has associated coordination means, which are designed such that, after information relating to the at least one operating function to be changed has been input,
- the change in the operating functions of all affected switching centres is coordinated automatically, and
- during the course of the automatic coordination, the administration commands for all affected switching centres are calculated automatically and are automatically sent to the affected switching centres.

2. Administration apparatus (1) according to Claim 1, **characterized**
**in that** a memory apparatus (3) is provided, in which the information which is required for administration and calculation of the administration commands is stored centrally.

3. Administration apparatus (1) according to Claim 1 or 2,
**characterized**
**in that** coordination means (2) are provided, and are used for administration and change in the operating functions of groups, and objects contained in these groups, in the CENTREX service.

4. Administration apparatus (1) according to Claim 1, 2 or 3,
**characterized**
**in that** coordination means (2) are provided, and are used for administration and changing of routing tables.

5. Administration apparatus (1) according to one of Claims 1 to 4,
**characterized**
**in that** an input apparatus (5) and a screen (4) are provided, and provide a graphics user interface for inputting the operating functions to be changed.

6. Administration apparatus (1) according to one of Claims 1 to 5,
**characterized**
**in that** coordination means (2) are provided, and receive and process acknowledgements from the corresponding switching centres (6a...6n) relating to the execution of the administration commands sent.

7. Method for administration and changing of operating functions of the plurality of switching centres which are arranged in a telephone network,
in which the operating functions of the respective switching centres are administered and changed by administration commands,
**characterized**
**in that**, after inputting information relating to at least one operating function to be changed,
- the change in the operating functions of all affected switching centres is coordinated automatically, and
- during the course of the automatic coordination, the administration commands for all affected switching centres are calculated automatically and are automatically sent to the affected switching centres.

8. Method according to Claim 7,
**characterized**
**in that** the information which is required for administration and calculation of the administration commands is stored centrally.

9. Method according to Claim 7 or 8,
**characterized**
**in that** the method is used for administration and changing of operating functions for groups, and objects contained in these groups, in the CENTREX service.

10. Method according to Claim 7, 8 or 9,
**characterized**
**in that** the method is used for administration and changing of routing tables.

11. Method according to one of Claims 7 to 10,
**characterized**
**in that** a graphics user interface is provided for inputting the operating functions to be changed.

12. Method according to one of Claims 7 to 11,
**characterized**
**in that** acknowledgements from the corresponding switching centres (6a...6n) relating to the execution of the administration commands sent are received and processed centrally.

## Revendications

1. Dispositif de gestion (1) pour gérer et modifier des fonctions de service de plusieurs centres de commutation situés dans un réseau téléphonique, les fonctions de service des centres de commutation (6a ... 6n) étant gérées et modifiées par des commandes de gestion qu'ils reçoivent du dispositif de gestion (1), avec un dispositif de saisie (5) pour saisir des informations concernant au moins une fonction de service à modifier, **caractérisé en ce que** sont associés au dispositif de gestion (1) des moyens de coordination qui sont réalisés de manière telle que, après la saisie d'informations concernant l'au moins une fonction de service à modifier,
- la modification des fonctions de service de tous les centres de commutation concernés est coordonnée automatiquement et,
- dans le cadre de la coordination automatique, les commandes de gestion sont calculées automatiquement pour tous les centres de commutation concernés et envoyées aux centres de commutation concernés.

2. Dispositif de gestion (1) selon la revendication 1, **caractérisé en ce qu'**est prévu un dispositif de stockage (3) dans lequel sont stockées centralement les informations qui sont requises pour gérer et calculer les commandes de gestion.

3. Dispositif de gestion (1) selon la revendication 1 ou 2, **caractérisé en ce que** sont prévus des moyens de coordination (2) qui servent à gérer et à modifier les fonctions de service de groupes et d'objets contenus dans ces groupes dans le service CENTREX.

4. Dispositif de gestion (1) selon la revendication 1, 2 ou 3, **caractérisé en ce que** sont prévus des moyens de coordination (2) qui sont utilisés pour gérer et modifier des tables de routage.

5. Dispositif de gestion (1) selon l'une des revendications 1 à 4, **caractérisé en ce que** sont prévus un dispositif de saisie (5) et un écran (4) qui mettent à disposition une surface utilisateur graphique pour la saisie des fonctions de service à modifier.

6. Dispositif de gestion (1) selon l'une des revendications 1 à 5, **caractérisé en ce que** sont prévus des moyens de coordination (2) qui reçoivent et traitent des messages de retour des centres de commutation correspondants (6a ... 6n) concernant l'exécution des commandes de gestion envoyées.

7. Procédé pour gérer et modifier des fonctions de service de plusieurs centres de commutation situés dans un réseau téléphonique, dans lequel les fonctions de service des centres de commutation respectifs sont gérées et modifiées par des commandes de gestion, **caractérisé en ce que**, après la saisie d'informations concernant l'au moins une fonction de service à modifier,
- la modification des fonctions de service de tous les centres de commutation concernés est coordonnée automatiquement et,
- dans le cadre de la coordination automatique, les commandes de gestion sont calculées automatiquement pour tous les centres de commutation concernés et envoyées aux centres de commutation concernés.

8. Procédé selon la revendication 7, **caractérisé en ce que** des informations requises pour la gestion et le calcul des commandes de gestion sont sauvegardées centralement.

9. Procédé selon la revendication 7 ou 8, **caractérisé en ce qu'**il est utilisé pour gérer et modifier les fonctions de service de groupes et d'objets contenus dans ces groupes dans le service CENTREX.

10. Procédé selon la revendication 7, 8 ou 9, **caractérisé en ce qu'**il est utilisé pour gérer et modifier des tables de routage.

11. Procédé selon l'une des revendications 7 à 10, **caractérisé en ce qu'**une surface utilisateur graphique est disponible pour la saisie des fonctions de service à modifier.

12. Procédé selon l'une des revendications 7 à 11, **caractérisé en ce que** des messages de retour des centres de commutation correspondants (6a ... 6n) concernant l'exécution des commandes de gestion envoyées sont reçus et traités centralement.
